# EUROPEAN PATENT APPLICATION

(11) **EP 3 438 945 A2**
(43) Date of publication of application: **06.02.2019**
(21) Application number: 18186380.4
(22) Date of filing: 30.07.2018
(51) Int. Cl.: G08G 1/005, G08G 1/16

(54) **PORTABLE PLUG AND PLAY COLLISION AVOIDANCE DEVICE**

(30) Priority: 03.08.2017 TW 10611391 U
(71) Applicant: Forward Electronics Co., ltd., 104 Taipei City (TW)
(72) Inventor: JIAN, Yong-Long, 236 New Taipei City (TW)
(74) Representative: Melchior, Robin

(57) **Abstract**

A portable plug and play collision avoidance device includes a processor, a positioning receiver, and a communication module. The communication module is electrically connected with the processor for transmitting message packets to other carriers or receiving message packets from other carriers. The portable plug and play collision avoidance device further includes a transmission interface, such that in case the processor determines that the carrier is located at a collision trajectory of another carrier, the processor will output a notice signal transmitted, through the transmission interface to a receiving interface of the carrier; or through the transmission interface to a receiving interface of a mobile device so as to achieve the purpose of early warning. As such, an instant location information and trajectory warning can be provided to various kinds of displays so as to change the user's travelling path instantly, and to secure the user's safety.

## Description

### BACKGROUND OF THE INVENTION

### 1. Field of the Invention

The present invention relates to a portable plug and play collision avoidance device, and more particularly, to a portable plug and play collision avoidance device carried on a carrier or mounted to electrical facilities.

### 2. Description of Related Art

Countries have recently endeavored to develop the collaborative positioning collision avoidance technology, attempting to avoid car accidents and improve traffic safety. This technology of early warning measure for vehicles relates to an instant early warning arrangement, such that through a variety of vehicles, a car concerned can obtain its driving track accurately; and moreover, by way of assisted positioning with surrounding detecting devices, and through sharing the location information acquired respectively from communication modules, the range of detection for vehicles can be increased. Namely, the possibility of car accident can be pre-analyzed, so that the driver can have sufficient time to have an emergent response so as to minimize the damage.

However, the conventional art collision avoidance device relates to a fixed module which is incorporated into the structure of a carrier, and which is not allowed to be moved from this carrier to another carrier. Namely, if a user owns an automobile, a motorcycle, and a bicycle, and if he/she wishes to protect his/her safety by employing on each one of the carriers the collaborative positioning collision avoidance technology, he/she has to mount on every carrier a collision avoidance device, rather than utilizing interface conversion to achieve the purpose of "one device for multiple usage and plug and play."

Given the above, in an attempt to solve the problem, as mentioned above, research and experiments for a "Portable Plug and Play Collision Avoidance Device" has been undertaken, eventually resulting in accomplishment of the present invention.

### SUMMARY OF THE INVENTION

An object of the present invention is to provide a portable plug and play collision avoidance device, which has a characteristic of compact, light, and detachable, and which can be carried on a carrier, such that by way of transmitting message packets to other carriers or receiving message packets from other carriers, the instant information around moving vehicle trajectory can be obtained. As such, this early warning to a potential risk of car accident can achieve the purpose of collision avoidance.

To achieve the above-mentioned object, the portable plug and play collision avoidance device, according to the present invention, is carried on a carrier, and comprises a processor, a positioning receiver, and a communication module. The positioning receiver is electrically connected with the processor for receiving signals transmitted from satellites. The communication module is electrically connected with the processor for transmitting message packets to other carriers or receiving message packets from other carriers. The portable plug and play collision avoidance device, according to the present invention, further comprises a transmission interface, such that in case the processor determines that the carrier is located at a collision trajectory of another carrier, the processor will output a notice signal transmitted, through the transmission interface to a receiving interface of the carrier; or through the transmission interface to a receiving interface of a mobile device so as to achieve the purpose of early warning.

Through the above-mentioned design, it is understood that the present invention is additionally provided with the transmission interface, such that miniaturization of the present invention will become a convenient portable warning device. Namely, no matter what carrier a user may take, an instant location information and trajectory warning can be provided to various kinds of displays so as to change the user's travelling path instantly, and to secure the user's safety.

According to the present invention, the positioning receiver may include a positioning antenna for enhancing positioning accuracy. Further, the communication module may include a communication antenna for increasing communication distance. Therefore, by setting up the positioning antenna and the communication antenna, the quality of positioning and communication can be enhanced effectively, such that the location information packet of each individual carrier can be transmitted and received accurately.

Further, according to the present invention, the transmission interface may include a transmission port, while the receiving interface may include a receiving port, where the transmission port and the receiving port relate to solid mechanical structure in connection with the transmission interface and the receiving interface. Therefore, through the provision of the transmission port and of the receiving port, the portable plug and play collision avoidance device, according to the present invention, and the carrier can be associated through the measure of mechanical structure. For instance, a card transmission port can be inserted into a slot receiving port so as to effect a corresponding connection. Besides, such a connection measure should be detachable so as to achieve the character of plug and play.

Still further, according to the present invention, the portable plug and play collision avoidance device may further comprise a power source, such that in addition to an external power supply, the power source can be installed inside of the portable plug and play collision avoidance device. In other words, even if the portable plug and play collision avoidance device is equipped to a non-power-driven vehicle, such as a bicycle, the portable plug and play collision avoidance device can still maintain a self-power-supply capability, and make a normal function for the portable plug and play collision avoidance device.

According to the present invention, the portable plug and play collision avoidance device may further comprise a display panel, a horn, and an indicator light (or comprises anyone of the display panel, the horn, and the indicator light; or comprises any two of them), so as to provide a screen-alerted warning, an audio-alerted warning, and/or an indicator light-alerted-warning (or a combination of two of the warnings). In other words, the portable plug and play collision avoidance device, according to the present invention, in addition to an external video and/or audio output, the portable plug and play collision avoidance device may be arranged with the display panel, the horn, and/or the indicator light (or a combination of two of them), without the need to connect an external device to obtain a warning effect.

Further, according to the present invention, the portable plug and play collision avoidance device may further comprise a digital certificate unit for verification of the user's identity and ensuring information security. As such, in case trustworthy secure connection or digital signature can be acquired, the message packets will be protected under the security mechanism, so as to avoid any third party from arbitrary interceptions or from revising any data during transmission, and to guarantee the security of all the uploaded and downloaded information.

Another object of the present invention is to provide a portable plug and play collision avoidance device, which has a characteristic of compact, light, and detachable, and which can be incorporated into an electric facility served as a positioning reference. As such, by way of transmitting message packets to other carriers or receiving message packets from other carriers, the instant information around moving vehicle trajectory can be obtained. This early warning to a potential risk of car accident can achieve the purpose of collision avoidance.

To achieve the another object, the portable plug and play collision avoidance device, according to the present invention, is incorporated into an electric facility served as a positioning reference, and comprises a processor, a positioning receiver, and a communication module. The positioning receiver is electrically connected with the processor for receiving signals transmitted from satellites. The communication module is electrically connected with the processor for transmitting message packets to other carriers or receiving message packets from other carriers. The portable plug and play collision avoidance device, according to the present invention, further comprises a transmission interface electrically connected with a corresponding receiving interface of the electric facility so as to obtain information of the trajectory of a carrier within a monitoring range by the electric facility.

Given the above, it is understood that the present invention not only is additionally provided with the transmission interface so as to become a convenient portable warning device, but also is associated with a roadside electric facility so as to transmit instantly location information and trajectory warning in a way of third-person perspective and in a form of message packets, and to change the user's travelling path instantly. This will secure the user's safety.

According to the present invention, the electric facility may further include a radar or a camera for transmitting detected information to the portable plug and play collision avoidance device, and by way of the communication module, the message packet of the status around the electric facility can be transmitted outward.

Further, according to the present invention, the transmission interface may include a transmission port, while the receiving interface may include a receiving port, where the transmission port and the receiving port relate to solid mechanical structure in connection with the transmission interface and the receiving interface. Therefore, through the provision of the transmission port and of the receiving port, the portable plug and play collision avoidance device, according to the present invention, and the electric facility can be associated through the measure of mechanical structure. For instance, a card transmission port can be inserted into a slot receiving port so as to effect a corresponding connection. Besides, such a connection measure should be detachable so as to achieve the character of plug and play.

Other objects, advantages, and novel features of the invention will become more apparent from the following detailed description when taken in conjunction with the accompanying drawings.

### BRIEF DESCRIPTION OF THE DRAWINGS

FIG. 1 is a block diagram illustrating the systematic layout of a portable plug and play collision avoidance device according to a first embodiment of the present invention;
FIG. 2 is a block diagram illustrating the systematic layout of a portable plug and play collision avoidance device according to a second embodiment of the present invention;
FIG. 3 is a block diagram illustrating the systematic layout of a portable plug and play collision avoidance device according to a third embodiment of the present invention;
FIG. 4 is a block diagram illustrating part of the systematic layout of a portable plug and play collision avoidance device according to a fourth embodiment of the present invention;
FIG. 5 is a block diagram illustrating the systematic layout of a portable plug and play collision avoidance device according to a fifth embodiment of the present invention; and
FIG. 6 is a block diagram illustrating the systematic layout of a portable plug and play collision avoidance device according to a sixth embodiment of the present invention.

### DETAILED DESCRIPTION OF THE PREFERRED EMBODIMENT

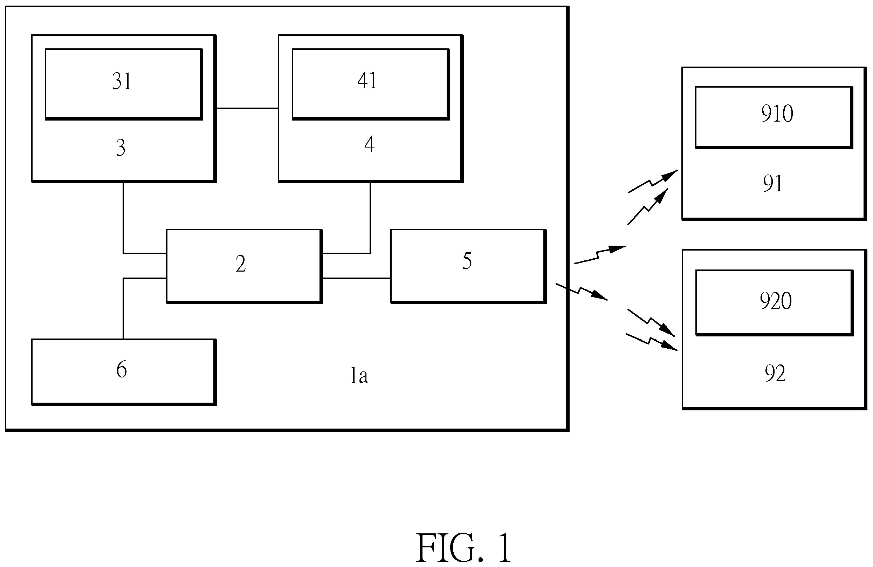

Referring to FIG. 1, a block diagram illustrating the systematic layout of a portable plug and play collision avoidance device according to a first embodiment of the present invention, the portable plug and play collision avoidance device 1a is carried on a carrier 91 which may be a power-driven vehicle, vessel, or aircraft; or a non-power-driven carrier including a bicycle, a roller skate, a skateboard, and so forth; such that the portable plug and play collision avoidance device 1a can be applied to various kinds of transportation. The portable plug and play collision avoidance device 1a comprises a processor 2, a positioning receiver 3 electrically connected with the processor 2, and a communication module 4 electrically connected with the processor 2. In the first embodiment, the positioning receiver 3 includes a positioning antenna 31 using the Global Positioning System (GPS), where the GPS receives electromagnetic wave signals transmitted from satellites, and proceeds with the positioning job based on current position coordinates. Further, the communication module 4 includes a communication antenna 41, such as a communication antenna of 5.9GHz. Still further, the technique of Dedicated Shortage Range Communications (DSRC) is adopted so as to establish a bidirectional transmission of information between different carriers 91, and to transmit message packets to other carriers or to receive message packets from other carriers, such that reliability of system and low latency of communication network can be ensured. Therefore, by setting up the positioning antenna 31 and the communication antenna 41, the quality of positioning and communication can be enhanced effectively, such that the location information packet of each individual carrier 91 can be transmitted and received accurately.

In the first embodiment, the portable plug and play collision avoidance device 1a further comprises a digital certificate unit 6 electrically connected with the processor 2. The user can apply for a digital certificate with the Certificate Authority (CA), such that the CA can be responsible for legality test of public key, and can verify and identify the user identity so as to execute signatures for the user certificates. This will ensure the identity of certificate holders and the ownership of public keys, so as to avoid any third party from arbitrary interceptions or from revising any data during transmission, and to guarantee the security of all the uploaded and downloaded information.

Further, in the first embodiment, the portable plug and play collision avoidance device 1a is featured in further comprising a transmission interface 5 utilizing the measure of wireless communication, including those of short-range and low-power wireless communication connections such as Bluetooth, ANT, ZigBee, and so forth. In contrast, the carrier 91 and a mobile device 92 may each be arranged with a receiving interface 910, 920 corresponding thereto. In case the processor 2 determines that the carrier 91 is located at a collision trajectory path of another carrier, the processor 2 will output a notice signal transmitted, through the transmission interface 5 which has a wireless transmission function, to the receiving interface 910 of the carrier 91; or to the receiving interface 920 of the mobile device 92 through the transmission interface 5, such that a warning message will be sent through a display panel, a horn, or a light of the carrier 91 or of the mobile device 92, so as to achieve the purpose of early warning.

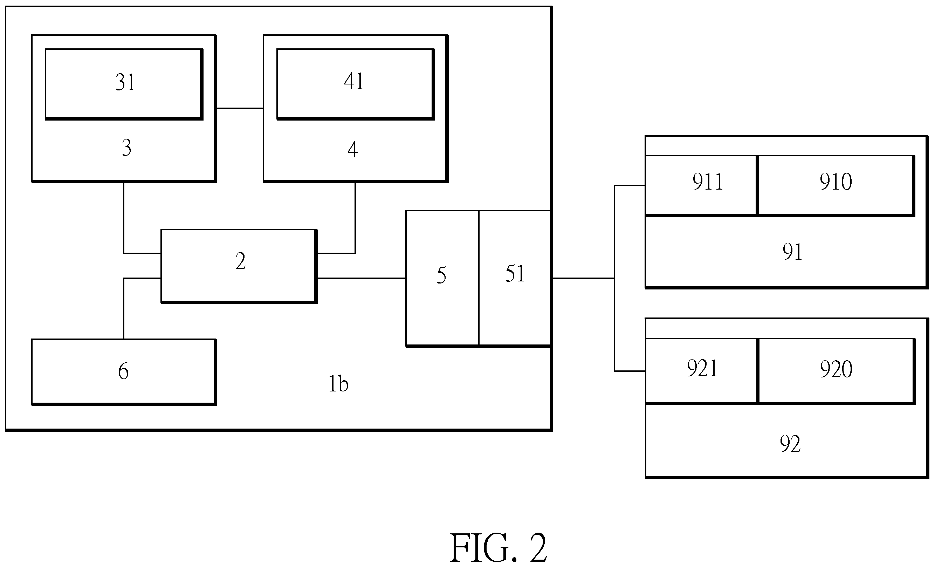

Now referring to FIG. 2, a block diagram illustrating the systematic layout of a portable plug and play collision avoidance device according to a second embodiment of the present invention, in the second embodiment, the portable plug and play collision avoidance device 1b is similar to that of the first embodiment in terms of the basic framework, except that in the second embodiment, the transmission interface 5 includes a transmission port 51. In the second embodiment, the transmission interface 5, such as a Universal Asynchronous Receiver/Transmitter (UART) or a Controller Area Network (CAN), may incorporate with a transmission port 51 such as an SATA, RS232, USB, and so forth, and is connected, correspondingly, with a receiving port 911, 921 of the receiving interface 910, 920. In the second embodiment, the transmission port 51 and the receiving ports 911, 921 relate to connection ports of solid mechanical structure, such that the measure of wiring or socketing is required in order to transmit the notice signal to the carrier 91 or the mobile device 92.

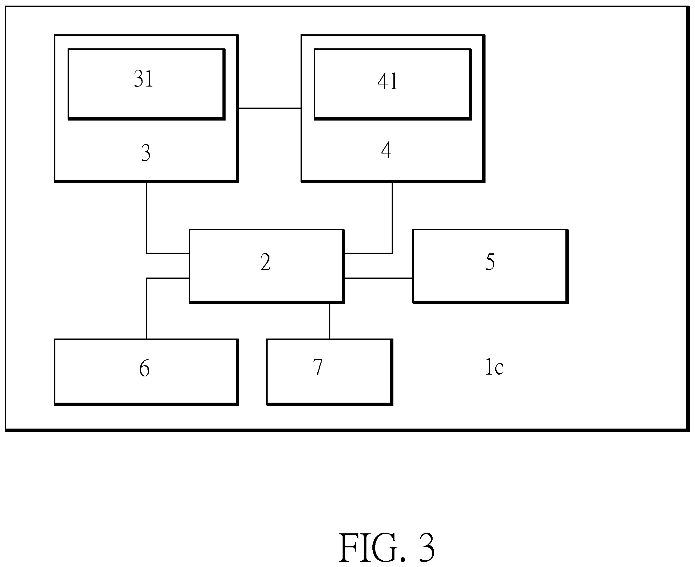

Further referring to FIG. 3, a block diagram illustrating the systematic layout of a portable plug and play collision avoidance device according to a third embodiment of the present invention, in the third embodiment, the portable plug and play collision avoidance device 1c is similar to that of the first embodiment, and of the second embodiment, in terms of the basic framework, except that in the third embodiment, the portable plug and play collision avoidance device 1c comprises a power source 7, such that in addition to an external power supply (namely a power supply from the carrier 91), the power source 7 can be installed inside of the portable plug and play collision avoidance device 1c. In other words, even if the portable plug and play collision avoidance device 1c is equipped to a non-power-driven vehicle, such as a bicycle, the portable plug and play collision avoidance device 1c can still maintain a self-power-supply capability, and make a normal function for the portable plug and play collision avoidance device 1c.

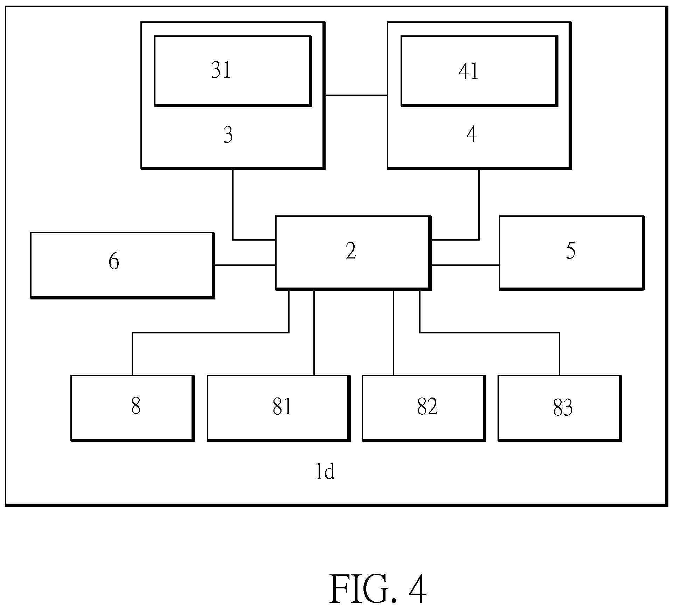

Now referring to FIG. 4, a block diagram illustrating part of the systematic layout of a portable plug and play collision avoidance device according to a fourth embodiment of the present invention in the fourth embodiment, the portable plug and play collision avoidance device 1d is similar to that of the first embodiment, and of the second embodiment, in terms of the basic framework, except that in the fourth embodiment, the portable plug and play collision avoidance device 1d comprises a power source 8, a display panel 81, a horn 82, and an indicator light 83 (or comprises the power source 8, and anyone of the display panel 81, the horn 82, and the indicator light 83; or comprises the power source 8 and any two of the display panel 81, the horn 82, and the indicator light 83), such that in addition to an external video and/or audio output (namely a display panel, a horn, and/or an indicator light of the carrier 91, or of the mobile device 92), the portable plug and play collision avoidance device 1d may be arranged with the display panel 81, the horn 82, and the indicator light 83 (or anyone of the display panel 81, the horn 82, and the indicator light 83; or any two of them). Namely, the portable plug and play collision avoidance device 1d can provide warnings, through the power supply from its own power source 8, including a screen-alerted warning, an audio-alerted warning, and/or an indicator light-alerted-warning (or a combination of two of the warnings), without the need to connect an external device to obtain a warning effect.

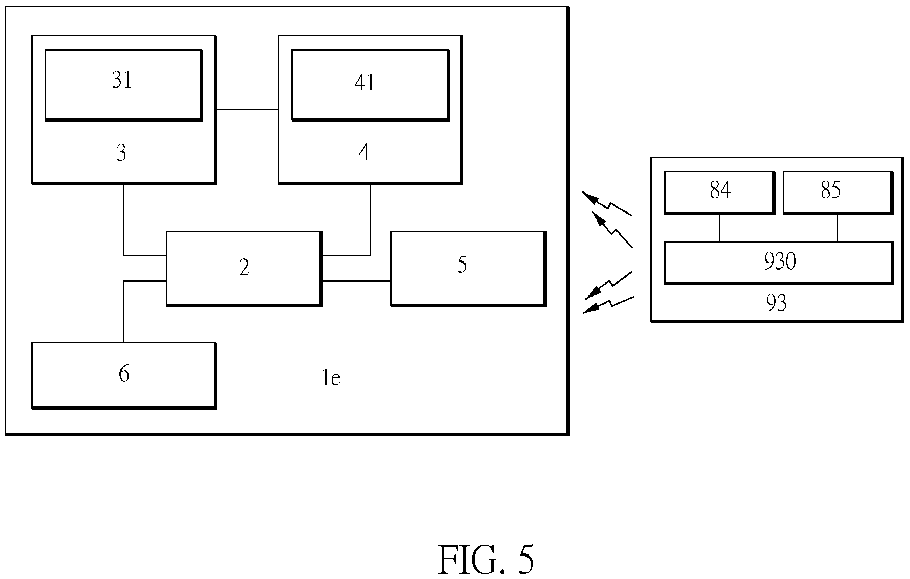

Further referring to FIG. 5, a block diagram illustrating the systematic layout of a portable plug and play collision avoidance device according to a fifth embodiment of the present invention, in the fifth embodiment, the portable plug and play collision avoidance device 1e can be incorporated into an electric facility 93 which is served as a positioning reference, and which includes traffic lights, street lights, transformer boxes, and so forth. The portable plug and play collision avoidance device 1e is similar to that of the first embodiment in terms of the basic framework, except that in the fifth embodiment, the portable plug and play collision avoidance device 1e has its transmission interface 5 relied on a receiving interface 930 of the electric facility 93 to obtain information of the trajectory of the carrier 91 within a monitoring range. In the fifth embodiment, the electric facility 93 further comprises a radar 84 and a camera 85 for transmitting detected information to the portable plug and play collision avoidance device 1e, and by way of the communication module 4, the message packet of the status around the electric facility 93 can be transmitted to another user's portable plug and play collision avoidance device. As such, in case another carrier does not equip with the portable plug and play collision avoidance device, according to the present invention, it is still possible for the carrier to grasp instant traffic information through the portable plug and play collision avoidance device 1e mounted to the electric facility 93, so as to provide more satisfactory location information to other users, and to lower the risk of car accidents.

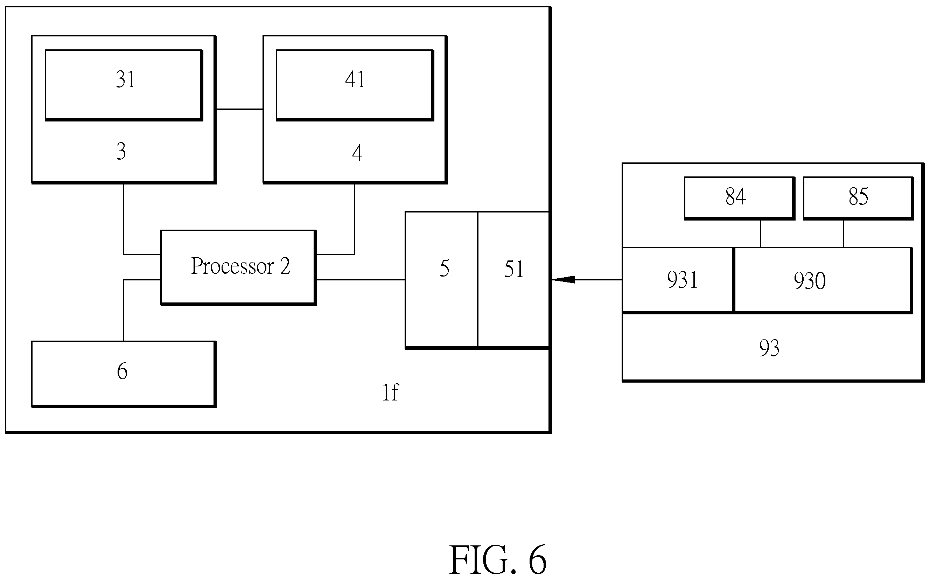

Still further referring to FIG. 6, a block diagram illustrating the systematic layout of a portable plug and play collision avoidance device according to a sixth embodiment of the present invention, in the six embodiment, the portable plug and play collision avoidance device 1f is similar to that of the fifth embodiment in terms of the basic framework, except that in the sixth embodiment, the portable plug and play collision avoidance device 1f has its transmission interface 5 consisted of a transmission port 51, such that the transmission interface 5 (such as a Universal Asynchronous Receiver/Transmitter (UART), a Controller Area Network (CAN), and so forth) may incorporate with a transmission port 51 (such as an SATA, an RS232, a USB, and so forth) to connect correspondingly with a receiving port 931 of the receiving interface 930. In the sixth embodiment, the transmission port 51 and the receiving port 931 relate to connection ports of solid mechanical structure, such that the measure of wiring or socketing is required in order to transmit the notice signal to the electric facility 93.

Given the above, it is understood that the present invention not only is additionally provided with the transmission interface 5 so as to become a convenient portable warning device, but also is associated with a roadside electric facility 93 so as to transmit instantly location information and trajectory warning in a way of third-person perspective and in a form of message packets, and to change the user's travelling path instantly. This will secure the user's safety.

Although the present invention has been explained in relation to its preferred embodiments, it is to be understood that many other possible modifications and variations can be made without departing from the scope of the invention as hereinafter claimed.

### LIST OF REFERENCE SIGNS

- 1a: portable plug and play collision avoidance device
- 1b: portable plug and play collision avoidance device
- 1c: portable plug and play collision avoidance device
- 1d: portable plug and play collision avoidance device
- 1e: portable plug and play collision avoidance device
- 1f: portable plug and play collision avoidance device
- 2: processor
- 3: positioning receiver
- 31: positioning antenna
- 4: communication module
- 41: communication antenna
- 5: transmission interface
- 51: transmission port
- 6: digital certificate unit
- 7: power source
- 8: power source
- 81: display panel
- 82: horn
- 83: indicator light
- 84: radar
- 85: camera
- 91: carrier
- 910: receiving interface
- 911: receiving port
- 92: mobile device
- 920: receiving interface
- 921: receiving port
- 93: electric facility
- 930: receiving interface
- 931: receiving port

## Claims

1. A portable plug and play collision avoidance device, carried on a carrier, comprising:
a processor;
a positioning receiver, electrically connected with the processor for receiving signals transmitted from satellites; and
a communication module, electrically connected with the processor for transmitting message packets to other carriers or receiving message packets from other carriers;
wherein, the portable plug and play collision avoidance device further comprises a transmission interface, such that in case the processor determines that the carrier is located at a collision trajectory of another carrier, the processor will output a notice signal transmitted, through the transmission interface to a receiving interface of the carrier; or through the transmission interface to a receiving interface of a mobile device so as to achieve the purpose of early warning.

2. The portable plug and play collision avoidance device as claimed in claim 1, wherein the positioning receiver includes a positioning antenna for enhancing positioning accuracy.

3. The portable plug and play collision avoidance device as claimed in claim 1, wherein the communication module includes a communication antenna for increasing communication distance.

4. The portable plug and play collision avoidance device as claimed in claim 1, wherein the transmission interface includes a transmission port, while the receiving interface includes a receiving port, and wherein the transmission port and the receiving port relate to solid mechanical structure in connection with the transmission interface and the receiving interface.

5. The portable plug and play collision avoidance device as claimed in claim 1, further comprising a power source.

6. The portable plug and play collision avoidance device as claimed in claim 1, further comprising a display panel, a horn, or an indicator light; or a combination thereof, so as to provide a screen-alerted warning, an audio-alerted warning, and/or an indicator light-alerted-warning.

7. The portable plug and play collision avoidance device as claimed in claim 1, further comprising a digital certificate unit for verification of the user's identity and ensuring information security.

8. A portable plug and play collision avoidance device, incorporated into an electric facility served as a positioning reference, comprising:
a processor;
a positioning receiver, electrically connected with the processor for receiving signals transmitted from satellites; and
a communication module, electrically connected with the processor for transmitting message packets to other carriers or receiving message packets from other carriers;
wherein, the portable plug and play collision avoidance device further comprises a transmission interface electrically connected with a corresponding receiving interface of the electric facility so as to obtain information of the trajectory of a carrier within a monitoring range by the electric facility.

9. The portable plug and play collision avoidance device as claimed in claim 8, wherein the electric facility further includes a radar or a camera for transmitting detected information to the portable plug and play collision avoidance device, and by way of the communication module, the message packet of the status around the electric facility can be transmitted outward.

10. The portable plug and play collision avoidance device as claimed in claim 8, wherein the transmission interface includes a transmission port, while the receiving interface includes a receiving port, and wherein the transmission port and the receiving port relate to solid mechanical structure in connection with the transmission interface and the receiving interface.
